# EUROPEAN PATENT APPLICATION

(11) **EP 4 636 328 A1**
(43) Date of publication of application: **22.10.2025**
(21) Application number: 24809916.0
(22) Date of filing: 05.01.2024
(51) Int. Cl.: F24F 11/54, F24F 11/64, F24F 11/77

(54) **WATER-BASED MULTI-SPLIT SYSTEM, END DEVICE, COMPUTING DEVICE AND CONTROL DEVICE**

(30) Priority: 25.05.2023 CN 202310601940
(71) Applicant: Qingdao Haier Air-Conditioning Electronic Co., Ltd, Qingdao, Shandong 266500 (CN); Qingdao Haier Air Conditioner General Corp., Ltd., Qingdao, Shandong 266101 (CN); Qingdao Haier Smart Technology R&D Co., Ltd., Shandong 266101 (CN); Haier Smart Home Co., Ltd., Qingdao, Shandong 266101 (CN)
(72) Inventor: JIN, Aoxiang, Qingdao, Shandong 266101 (CN); ZHAO, Hailong, Qingdao, Shandong 266101 (CN); HUANG, Jinjin, Qingdao, Shandong 266101 (CN); LIU, Dengwei, Qingdao, Shandong 266101 (CN)
(74) Representative: Michalski Hüttermann & Partner Patentanwälte mbB
(86) International application number: PCT/CN2024/070938
(87) International publication number: WO 2024/239665

(57) **Abstract**

A water-based multi-split system, an end device (130), a computing device (120) and a control device (110). The water-based multi-split system comprises: a plurality of end devices (130), which are used for distributing cold which is generated by a water system, and generating actual cold according to a collected cold parameter; a plurality of computing devices (120), each of the computing devices (120) being connected to one or more end devices (130), and being used for computing predicted cold according to the actual cold, which is generated by the one or more end devices (130), and generating an adjustment instruction for controlling the operation of the end devices (130); and a control device (110), which is respectively connected to the plurality of computing devices (120), and is used for generating, according to the predicted cold which is computed by the plurality of computing devices (120), a control instruction for adjusting the cooling capacity of the water system. In this way, a large quantity of pieces of cold data are dispersed to a plurality of computing devices (120) for computing, thereby shortening the data computing time; and control permissions are also dispersed to the computing devices (120), thereby realizing a quick response.

## Description

This application claims priority to Chinese Patent Application No. CN202310601940.5, filed on May 25, 2023, the contents of which is incorporated herein by reference in its entirety.

### TECHNICAL FIELD

The present disclosure relates to the technical field of smart home appliances, and more particularly to a water multi-split system, a terminal unit, a computing unit, and a controlling unit.

### BACKGROUND

At present, the energy consumption of the central air-conditioning system accounts for a large proportion of building energy consumption. During the operation of the air conditioner, there is a need to reduce the energy consumption of the air conditioner.

In order to solve the requirement of reducing the energy consumption of the air conditioner, the related art discloses a terminal cooling capacity balancing and controlling system, which comprises a terminal unit and a controlling unit, where the terminal unit collects a total cooling capacity demand of each terminal unit and communicates with an air-conditioning main unit, the air-conditioning main unit calculates an optimal operating number of freezers and an optimal operating frequency of water pumps to control the operation, and then adjusts a frequency of the terminal air duct by a PID controller, thereby realizing the dynamic adjustment of the chilled water system according to the demand of the terminal load and ensuring the energy-saving operation of the system.

In the process of implementing the embodiments of the present disclosure, it is found that at least the following problems exist in the related art:

Although the related technology reduces the operating energy consumption of the air conditioning system, all the collected data is fed back to the air-conditioning main unit for calculation, and the amount of calculation data is huge, resulting in a slow response time.

It should be noted that the information disclosed in the above-described background chapter is only for enhancing understanding of the background of the present disclosure, and thus may comprise information that does not constitute prior art known to one having skills in the art.

### SUMMARY

In order to have a basic understanding of some aspects of the disclosed embodiments, a brief summary is given below. The summary is not intended to be a general comment, nor is it intended to identify key or important constituent elements or to delineate the scope of protection of these embodiments, but rather serves as a preface to the detailed description that follows.

The embodiments of the present disclosure provide a water multi-split system, a terminal unit, a computing unit, and a controlling unit, to reduce the calculation pressure of the air conditioning main unit and accelerate the response speed.

In some embodiments, the water multi-split system comprises: a terminal unit configured to allocate a cooling capacity generated by a water system and according to a collected cooling capacity parameter, generate an actual cooling capacity; a plurality of computing units, each of the computing units connected to one or more terminal units respectively, configured to calculate a predicted cooling capacity according to an actual cooling capacity generated by the one or more terminal units, and generate a regulation command for controlling the terminal units to operate; and a controlling unit connected to the plurality of computing units respectively, and configured to, according to the predicted cooling capacity calculated by the plurality of computing units, generate a control command for regulating a refrigerating capacity of the water system.

In some embodiments, the terminal unit comprises: a plurality of terminal fan coils; a parameter acquisition module configured to acquire a cooling capacity parameter of each of the terminal fan coil; a model invocation module connected to the parameter acquisition module and configured to, according to a cooling capacity parameter of each of the terminal fan coil, generate an actual cooling capacity of each of the terminal fan coils; a first aggregation module configured to aggregate the actual cooling capacity of each of the terminal fan coil to generate a total actual cooling capacity; and a first communication module configured to transmit the total actual cooling capacity to the corresponding computing unit.

In some embodiments, the model invocation module comprises: an invocation sub-module configured to invoke a cooling capacity model after receiving a cooling capacity parameter of the corresponding terminal fan coil, and a cooling capacity generation module configured to, according to a cooling capacity model, map the cooling capacity parameter of each of the terminal fan coils to the actual cooling capacity of each of the terminal fan coils.

In some embodiments, the computing unit comprises: a load prediction module configured to, according to a preset load prediction model, calculate a predicted cooling capacity with the total actual cooling capacity; a second communication module comprising a receiving sub-module configured to receive the total actual cooling capacity transmitted by the terminal unit; and a transmitting sub-module configured to transmit the predicted cooling capacity to the controlling unit.

In some embodiments, the transmitting sub-module is further configured to, in a case where the total actual cooling capacity is outside the predetermined range, according to a preset group planning algorithm, regulate the actual cooling capacity of the terminal fan coil, until the total actual cooling capacity is inside the predetermined range, and transmit the total actual cooling capacity to the controlling unit.

In some embodiments, the predetermined range is 95% to 105% of the predicted cooling capacity.

In some embodiments, the computing unit further comprises: a fuzzy control module configured to acquire a cooling capacity error, a cooling capacity error change rate, a fuzzy control rule table, and a membership parameter, perform fuzzy output according to the cooling capacity error, the cooling capacity error change rate, the fuzzy control rule table, and the membership parameter, and generate a fuzzy signal; and a command generation module configured to, according to the fuzzy signal, generate a PID signal and, according to the PID signal, generate a regulation command.

In some embodiments, the controlling unit comprises: a third communication module configured to receive the predicted cooling capacity transmitted by the computing unit; and configured to transmit a control command to the water system; a second aggregation module configured to aggregate the predicted cooling capacities transmitted by the plurality of computing units to generate a total predicted cooling capacity, a data acquisition module configured to acquire an environmental parameter and a user control data; and an optimization module configured to, according to the total predicted cooling capacity, the environmental parameter and the user control data, perform coupling solution to generate an optimal control parameter, and according to the optimal control parameter, generate the control command.

In some embodiments, the terminal unit, for the water multi-split system, comprises: a regulation module configured to allocate a cooling capacity generated by the water system; a cooling capacity generation module configured to, according to a collected cooling capacity parameter, generate an actual cooling capacity; where the actual cooling capacity is used to generate the predicted cooling capacity.

In some embodiments, the cooling capacity generation module comprises: a parameter acquisition module configured to acquire a cooling capacity parameter of each of the terminal fan coil; a model invocation module connected to the parameter acquisition module and configured to, according to a cooling capacity parameter of each of the terminal fan coil, generate an actual cooling capacity of each of the terminal fan coils; a first aggregation module configured to aggregate the actual cooling capacity of each of the terminal fan coil to generate a total actual cooling capacity; and a first communication module configured to transmit the total actual cooling capacity to the corresponding computing unit.

In some embodiments, the model invocation module comprises: an invocation sub-module configured to, after receiving a cooling capacity parameter of the corresponding terminal fan coil, invoke a cooling capacity model, and a cooling capacity generation module configured to, according to a cooling capacity model, map the cooling capacity parameter of each of the terminal fan coils to the actual cooling capacity of each of the terminal fan coils.

In some embodiments, the computing unit, for the water multi-split system, comprises: a computing module configured to, according to an actual cooling capacity generated by one or more terminal units, calculate a predicted cooling capacity; where the predicted cooling capacity is used to generate a control command for regulating the refrigerating capacity of the water system, and a control module configured to generate a regulation command to control the terminal unit to operate.

In some embodiments, the computing unit comprises: a load prediction module configured to, according to a preset load prediction model, calculate a predicted cooling capacity with the total actual cooling capacity; and a second communication module comprising a receiving sub-module configured to receive the total actual cooling capacity transmitted by the terminal unit and a transmitting sub-module configured to transmit the predicted cooling capacity to the controlling unit.

In some embodiments, the transmitting sub-module is further configured to, in a case where the total actual cooling capacity is outside the predetermined range, according to a preset group planning algorithm, regulate the actual cooling capacity of the terminal fan coil, until the total actual cooling capacity is inside the predetermined range, and transmit the total actual cooling capacity to the controlling unit.

In some embodiments, the predetermined range is 95% to 105% of the predicted cooling capacity.

In some embodiments, the computing unit further comprises: a fuzzy control module configured to acquire a cooling capacity error, a cooling capacity error change rate, a fuzzy control rule table, and a membership parameter, perform fuzzy output according to the cooling capacity error, the cooling capacity error change rate, the fuzzy control rule table, and the membership parameter, and generate a fuzzy signal; and a command generation module configured to, according to the fuzzy signal, generate a PID signal and, according to the PID signal, generate a regulation command.

In some embodiments, the controlling unit, for the water multi-split system, comprises a process module configured to, according to a predicted cooling capacity calculated by the computing unit, generate a control command for regulating the refrigerating capacity of the water system.

In some embodiments, the controlling unit comprises: a third communication module configured to receive the predicted cooling capacity transmitted by the computing unit; and configured to transmit a control command to the water system; a second aggregation module configured to aggregate the predicted cooling capacities transmitted by the plurality of computing units to generate a total predicted cooling capacity, a data acquisition module configured to acquire an environmental parameter and a user control data; and an optimization module configured to, according to the total predicted cooling capacity, the environmental parameter and the user control data, perform coupling solution to generate an optimal control parameter, and according to the optimal control parameter, generate the control command.

The water multi-split system, the terminal unit, the computing unit, and the controlling unit provided by the embodiments of the present disclosure can achieve the following technical effects:

With a plurality of computing units provided, the predicted cooling capacity is calculated according to the cooling capacity data collected by the terminal by the computing unit, to be transmitted to the controlling unit. The controlling unit issues a control command to the water system according to the predicted cooling capacity, the water system generates the cooling capacity according to the control command, and finally the computing unit regulates the terminal unit. In this way, not only a plurality of independent computing units is provided, but also a large amount of cooling capacity data is distributed to a plurality of computing units for calculation, thereby shortening the time of data calculation, and the control authority is distributed to the computing units to realize quick response. Therefore, the calculation pressure of the air conditioning main unit can be reduced, and the response speed can be accelerated.

The above general description and the following description are merely exemplary and explanatory, and are not intended to limit the present disclosure.

### BRIEF DESCRIPTION OF THE DRAWINGS

One or more embodiments are illustrated by the accompanying drawings corresponding thereto, these illustrative descriptions and drawings do not constitute a limitation of the embodiments, the elements having the same reference numerals in the drawings are shown as similar elements, and the drawings do not constitute a limitation of scale, and where:
Fig. 1 is a schematic structural diagram of a water multi-split system according to an embodiment of the present disclosure.
Fig. 2 is a schematic structural diagram of a terminal unit according to the embodiment of the present disclosure.
Fig. 3 is a schematic structural diagram of a model invocation module according to the embodiment of the present disclosure.
Fig. 4 is a schematic structural diagram of a computing unit according to the embodiment of the present disclosure.
Fig. 5 is a flowchart to establish a load prediction model according to the embodiment of the present disclosure.
Fig. 6 is a schematic structural diagram of a controlling unit according to the embodiment of the present disclosure.
Fig. 7 is a schematic structural diagram of a practical application provided by the embodiment of the present disclosure.

### DETAILED DESCRIPTION OF THE EMBODIMENTS

In order to understand the features and technical contents of the embodiments of the present disclosure in more detail, the implementation of the embodiments of the present disclosure will be described in detail below with reference to the accompanying drawings, which are for reference and illustration only, and are not intended to limit the embodiments of the present disclosure. In the following technical description, for convenience of explanation, a number of details are illustrated to provide a full understanding of the disclosed embodiments. However, one or more embodiments may still be implemented without these details. In other cases, well-known structures and devices may be simplified in illustration to simplify the drawings.

The terms "first", "second", and the like in the specification and claims of the embodiments of the present disclosure, and the above-described drawings are used to distinguish similar objects, and are not necessarily used to describe a specific order or sequence. It should be understood that the data so used may be interchangeable where appropriate so that the examples of the embodiments of the present disclosure are described herein. Furthermore, the terms "comprise" and "have" and any variations thereof are intended to cover non-exclusive inclusions.

Unless otherwise specified, the term "a plurality of" means two or more.

The term "corresponding" may refer to an associative relationship or a bonding relationship, and A and B corresponding means that A and B having an associative relationship or a bonding relationship.

In the case where there is no conflict, the embodiments of the present disclosure and the features of the embodiments may be combined with each other.

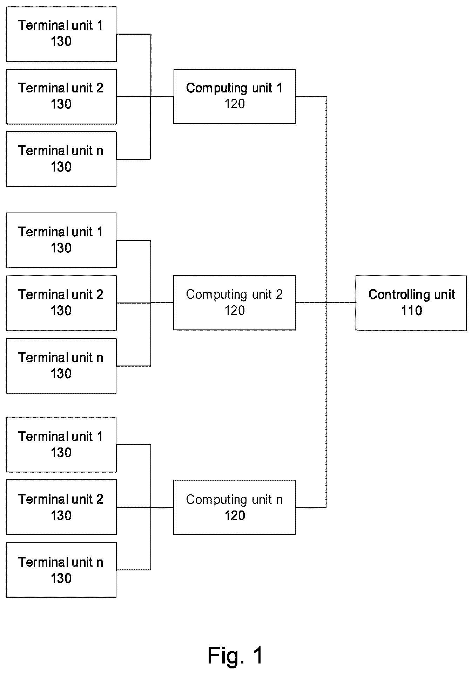

With reference to Fig. 1, the embodiment of the present disclosure provides a water multi-split system comprising a plurality of terminal units 130, a plurality of computing units 120, and a controlling unit 110. The terminal unit 130 is configured to allocate the cooling capacity generated by the water system, and to generate an actual cooling capacity according to the collected cooling capacity parameter. Each of the computing units 120 is connected to one or more terminal units 130 respectively, and is configured to calculate a predicted cooling capacity according to the actual cooling capacity generated by the one or more terminal units 130, and generate a regulation command for controlling the terminal units 130 to operate. The controlling unit 110 is connected to the plurality of computing units 120 respectively, and is configured to generate a control command for regulating the refrigerating capacity of the water system according to the predicted cooling capacity calculated by the plurality of computing units 120.

With a plurality of computing units provided, the predicted cooling capacity is calculated according to the cooling capacity data collected by the terminal by the computing unit, to be transmitted to the controlling unit. The controlling unit issues a control command to the water system according to the predicted cooling capacity, the water system generates the cooling capacity according to the control command, and finally the computing unit regulates the terminal unit. In this way, not only is a plurality of independent computing units provided, but also a large amount of cooling capacity data is distributed to a plurality of computing units for calculation, thereby shortening the time of data calculation, and the control authority is distributed to the computing units to realize quick response. Therefore, the calculation pressure of the air conditioning main unit can be reduced, and the response speed can be accelerated.

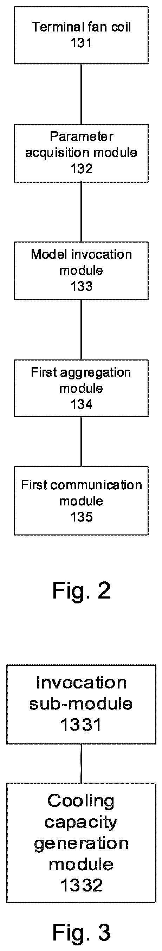

Optionally, as shown in Figs. 1 and 2, the terminal unit 130 comprises a terminal fan coil 131, a parameter acquisition module 132, a model invocation module 133, a first aggregation module 134, and a first communication module 135. The parameter acquisition module 132 is configured to acquire the cooling capacity parameter of each of the terminal fan coils 131. The model invocation module 133 is connected to the parameter acquisition module 132, and is configured to, according to the cooling capacity parameter of each of the terminal fan coils 131, generate the actual cooling capacity of each of the terminal fan coils 131. The first aggregation module 134 is configured to aggregate the actual cooling capacity of each of the terminal fan coils 131 to generate a total actual cooling capacity. The first communication module 135 is configured to transmit the total actual cooling capacity to the corresponding computing unit 120.

Optionally, the cooling capacity parameter comprises part or all of an environmental parameter, a control parameter, a pedestrian flow intensity, a fresh air volume, and a comfort level. According to the cooling capacity parameter, the actual cooling capacity of each of the terminal fan coils is generated, so as to make statistics on the cooling capacity of each area, which is convenient for subsequently providing cold by area, thus conducive to the energy-saving operation of the system.

Optionally, as shown in Figs. 2 and 3, the model invocation module 133 comprises an invocation sub-module 1331 and a cooling capacity generation module 1332. The invocation sub-module 1331 is configured to, after receiving the cooling capacity parameter of the corresponding terminal fan coil 131, invoke the cooling capacity model. The cooling capacity generation module 1332 is configured to, according to the cooling capacity model, map the cooling capacity parameter of each of the terminal fan coils 131 to the actual cooling capacity of each of the terminal fan coils 131.

The preset cooling capacity model is invoked, and the cooling capacity parameter is mapped to the actual cooling capacity, thus accelerating the generation speed of the actual cooling capacity and reducing the calculation pressure.

Optionally, the cooling capacity model is stored in the computing unit, and the modeling of the cooling capacity model comprises inputting part or all of the environmental parameter, the control parameter, the pedestrian flow intensity, the fresh air volume, and the comfort level, and training to generate a mapping function relationship with a standardized model.

The standardized model can be a black box model or an expression model.

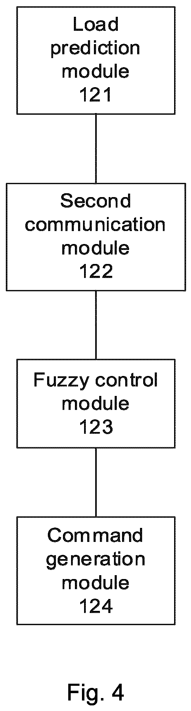

Optionally, as shown in Figs. 1 and 4, the computing unit 120 comprises a load prediction module 121 and a second communication module 122. The load prediction module 121 is configured to, according to a preset load prediction model, calculate the total actual cooling capacity with the predicted cooling capacity. The second communication module 122 comprises a receiving sub-module and a transmitting sub-module. The receiving sub-module is configured to receive the total actual cooling capacity transmitted by the terminal unit 130. The transmitting sub-module is configured to transmit the predicted cooling capacity to the controlling unit 110.

A plurality of computing units is provided to separately predict the cooling capacity of the corresponding terminal fan coils at the next moment, which is conducive to improving the accuracy of prediction, facilitating subsequent providing cold by area, distributing the calculation pressure, and accelerating the response speed.

During the load prediction, according to the actual situation of the computing unit and the historical operation data of the computing unit, the overall load prediction is performed on the area covered by the computing unit, and the historical data needed to be preliminarily processed is the historical load data of the corresponding area of each of the computing unit.

In the embodiment, the Long-Short Term Memory network with the attention mechanism is employed to predict the load of each of the computing unit, and the factors to be considered are mainly: an external temperature, an external radiation intensity, an external enthalpy value, a fresh air volume, and a previous time load data.

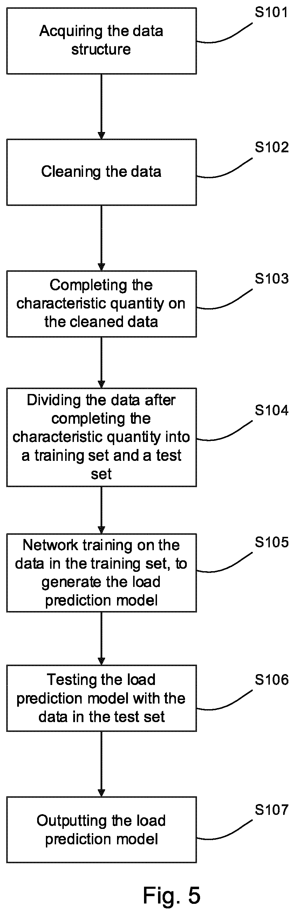

With reference to Fig. 5, the process of establishing the load prediction model, by the Long-Short Term Memory network with the attention mechanism, comprises:
S101, acquiring the data structure;
S102, cleaning the data;
S103, completing the characteristic quantity on the cleaned data;
S104, dividing the data after completing the characteristic quantity into a training set and a test set;
S105, network training on the data in the training set, to generate the load prediction model;
S106, testing the load prediction model with the data in the test set; and
S107, outputting the load prediction model.

Optionally, the acquiring and cleaning of data are according to time, to ensure that the data corresponds to time. In a case of missing data, the corresponding time is not directly deleted. The step of completing the characteristic quantity on the data, comprises: extracting seasonal factors and filling missing values. For filling missing values, it is recommended to complete the seasonal factors first. For example, whether it is a working day, number of hours, month, n-th week of the year, etc. Then, adopt machine learning-like methods, interpolation, such as k-Nearest Neighbors, etc. In this way, it can not only complete the missing values, but also enhance the periodic characteristics.

Optionally, the dividing of the training set and the test set can be done according to a certain proportion. The training set is used to train and generate the load prediction model. The test set is used to test the generated load prediction model.

In the embodiment, the output load prediction model is stored on the computing unit, and the training model for establishing the load prediction model is stored on the host computer, that is, the cloud server of the controlling unit. It is operated directly on the computing unit each time the load is predicted. Also, the training model is regularly used to train the load prediction model and update the deployed model parameters.

Optionally, the transmitting sub-module is further configured to, in a case where the total actual cooling capacity is outside the predetermined range, according to a preset group planning algorithm, regulate the actual cooling capacity of the terminal fan coil, until the total actual cooling capacity is inside the predetermined range, and transmit the total actual cooling capacity to the controlling unit.

Optionally, the predetermined range is 95% to 105% of the predicted cooling capacity of the corresponding terminal fan coil, specifically 95%, 97%, 103%, or 105%.

In a case where the total actual cooling capacity uploaded by the terminal fan coil does not meet the predicted cooling capacity, the transmitting sub-module automatically triggers the group planning algorithm to regulate the corresponding terminal fan coil with the minimum comfort sacrifice, to realize that the total actual cooling capacity meets the predicted cooling capacity range. In this way, it is conducive to improving the accuracy of cooling capacity prediction, providing cold on demand according to areas, emphasizing comfort, and maximizing energy-saving space.

Optionally, as shown in connection with Figs. 1 and 4, the computing unit 120 further comprises a fuzzy control module 123 and a command generation module 124. The fuzzy control module 123 is configured to acquire a cooling capacity error, a cooling capacity error change rate, a fuzzy control rule table, and a membership parameter, and perform fuzzy output according to the cooling capacity error, the cooling capacity error change rate, the fuzzy control rule table, and the membership parameter, and generate a fuzzy signal. The command generation module 124 is configured to, according to the fuzzy signal, generate a PID signal and, according to the PID signal, generate a regulation command.

In practical applications, the fuzzy control module can be a fuzzy controller. The command generation module can be a PID controller. The fuzzy controller, after acquiring the cooling capacity error, the change rate of cooling capacity error, the fuzzy control rule table, and the membership parameters, performs fuzzy output and generates the fuzzy signal. The PID controller, according to the fuzzy signal, generates a regulation command for regulating the frequency of the terminal fan coil.

The computing unit, according to the fuzzy control module and the command generation module, controls the frequency of the terminal fan coil, so as to distribute the ventilation system control authority of the host computer to the computing unit. In this way, it is conducive to responding quickly. Also, when the computing unit controls the frequency of the terminal fan coil, it gives the control freedom degree through fuzzy control, and does not strictly divide the controlled comfort and the cooling capacity supply, which helps to reduce the calculation pressure.

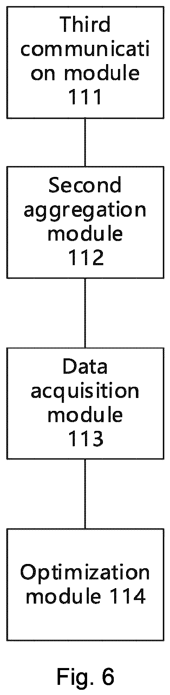

Optionally, as shown in Figs. 1 and 6, the controlling unit 110 comprises a third communication module 111, a second aggregation module 112, a data acquisition module 113, and an optimization module 114. The third communication module 111 is configured to receive the predicted cooling capacity transmitted by the computing unit 120, and configured to transmit the control command to the water system. The second aggregation module 112 is configured to aggregate the predicted cooling capacity transmitted by the plurality of computing units 120, to generate a total predicted cooling capacity. The data acquisition module 113 is configured to acquire the environmental parameter and the user control data. The optimization module 114 is configured to, according to the total predicted cooling capacity, the environmental parameter, and the user control data, perform a coupling solution to generate an optimal control parameter, and, according to the optimal control parameter, generate the control command.

The optimization module can be a cloud solver, and after receiving the total predicted cooling capacity, the cloud solver reads the current environmental parameter, according to the real-time variables required in the preset fitness objective function. Also, the user needs to input the adjustable range of the control parameter to be optimized, and customize the boundary condition, which are coupled into the fitness objective function of the cloud solver, to solve the optimal control parameter and issue the command to the water system for refrigeration.

After refrigeration of the water system, the environmental parameter, the control parameter range, the boundary condition, and the time characteristics change accordingly, forming a closed control loop. On this basis, the water system can actively respond to real-time loads, ensure the optimal operation of each unit, and achieve multi-level autonomous brain control.

Optionally, a terminal unit, for the water multi-split system, comprises a regulation module and a cooling capacity generation module. The regulation module is configured to allocate the cooling capacity generated by the water system. The cooling capacity generation module is configured to, according to the collected cooling capacity parameter, generate an actual cooling capacity. The actual cooling capacity is used to generate the predicted cooling capacity.

Optionally, the cooling capacity generation module comprises a plurality of terminal fan coils, a parameter acquisition module, a model invocation module, a first aggregation module, and a first communication module. The parameter acquisition module is configured to acquire the cooling capacity parameter of each of the terminal fan coils. The model invocation module is connected to the parameter acquisition module and is configured to, according to the cooling capacity parameter of each of the terminal fan coils, generate the actual cooling capacity of each of the terminal fan coils. The first aggregation module is configured to aggregate the actual cooling capacity of each of the terminal fan coils to generate a total actual cooling capacity. The first communication module is configured to transmit the total actual cooling capacity to the corresponding computing unit.

Optionally, the cooling capacity parameter comprises part or all of an environmental parameter, a control parameter, a pedestrian flow intensity, a fresh air volume, and a comfort level. According to the cooling capacity parameter, the actual cooling capacity of each of the terminal fan coils is generated, so as to make statistics on the cooling capacity of each area, which is convenient for subsequently providing cold by area, thus conducive to the energy-saving operation of the system.

Optionally, the model invocation module comprises an invocation sub-module and a cooling capacity generation module. The invocation sub-module is configured to, after receiving the cooling capacity parameter of the corresponding terminal fan coil, invoke the cooling capacity model. The cooling capacity generation module is configured to, according to the cooling capacity model, map the cooling capacity parameter of each of the terminal fan coils to the actual cooling capacity of each of the terminal fan coils.

The preset cooling capacity model is invoked, and the cooling capacity parameter is mapped to the actual cooling capacity, thus accelerating the generation speed of the actual cooling capacity and reducing the calculation pressure.

Optionally, the cooling capacity model is stored in the computing unit, and the modeling of the cooling capacity model comprises inputting part or all of the environmental parameter, the control parameter, the pedestrian flow intensity, the fresh air volume, and the comfort level, and training to generate a mapping function relationship with a standardized model.

The standardized model can be a black box model or an expression model.

Optionally, a computing unit for, the water multi-split system, comprises a computing module and a control module. The computing unit is configured to calculate the predicted cooling capacity with the actual cooling capacity generated by the one or more terminal units. The predicted cooling capacity is configured to generate a control command to regulate the refrigerating capacity of the water system. The control module is configured to generate a regulation command to control the terminal unit to operate.

Optionally, the computing unit, comprising the load prediction module, is configured to, according to a preset load prediction model, calculate the predicted cooling capacity with the total actual cooling capacity, and a second communication module comprising a receiving sub-module configured to receive the total actual cooling capacity transmitted by the terminal unit and a transmitting sub-module configured to transmit the predicted cooling capacity to the controlling unit.

A plurality of computing units is provided to separately predict the cooling capacity of the corresponding terminal fan coils at the next moment, which is conducive to improving the accuracy of prediction, facilitating subsequent providing cold by area, distributing the calculation pressure, and accelerating the response speed.

During load prediction, according to the actual situation of the computing unit and the historical operating data of the computing unit, the overall load prediction is performed on the area covered by the computing unit. The historical data needed to be preliminarily processed is the historical load data of the corresponding area of each of the computing units.

In the embodiment, the Long-Short Term Memory network with the attention mechanism is employed to predict the load of each of the computing unit, and the factors to be considered are mainly: an external temperature, an external radiation intensity, an external enthalpy value, a fresh air volume, and a previous time load data.

With reference to Fig. 5, the process of establishing the load prediction model, by the Long-Short Term Memory network with the attention mechanism, comprises:
S101, acquiring the data structure;
S102, cleaning the data;
S103, completing the characteristic quantity on the cleaned data;
S104, dividing the data after completing the characteristic quantity into a training set and a test set;
S105, network training on the data in the training set, to generate the load prediction model;
S106, testing the load prediction model with the data in the test set; and
S107, outputting the load prediction model.

Optionally, the acquiring and cleaning of data are according to time, to ensure that the data corresponds to time.

In a case of missing data, the corresponding time is not directly deleted. The step of completing the characteristic quantity on the data comprises: extracting seasonal factors and filling missing values. For filling missing values, it is recommended to complete the seasonal factors first. For example, whether it is a working day, the number of hours, the month, the n-th week of the year, etc. Then, adopt machine learning-like methods, interpolation, such as k-Nearest Neighbors, etc. In this way, it can not only complete the missing values but also enhance the periodic characteristics.

Optionally, the dividing of the training set and the test set can be done according to a certain proportion. The training set is used to train and generate the load prediction model. The test set is used to test the generated load prediction model.

In the embodiment, the output load prediction model is stored on the computing unit, and the training model for establishing the load prediction model is stored on the host computer, that is, the cloud server of the controlling unit. It is operated directly on the computing unit each time the load is predicted. Also, the training model is regularly used to train the load prediction model and update the deployed model parameters.

Optionally, the transmitting sub-module is further configured to, in a case where the total actual cooling capacity is outside the predetermined range, according to a preset group planning algorithm, regulate the actual cooling capacity of the terminal fan coil, until the total actual cooling capacity is inside the predetermined range, and transmit the total actual cooling capacity to the controlling unit.

Optionally, the predetermined range is 95% to 105% of the predicted cooling capacity of the corresponding terminal fan coil, specifically 95%, 97%, 103%, or 105%.

In a case where the total actual cooling capacity uploaded by the terminal fan coil does not meet the predicted cooling capacity, the transmitting sub-module automatically triggers the group planning algorithm to regulate the corresponding terminal fan coil with the minimum comfort sacrifice, to realize that the total actual cooling capacity meets the predicted cooling capacity range. In this way, it is conducive to improving the accuracy of cooling capacity prediction, providing cold on demand according to areas, emphasizing comfort, and maximizing energy-saving space.

Optionally, the computing unit further comprises: a fuzzy control module configured to acquire a cooling capacity error, a cooling capacity error change rate, a fuzzy control rule table, and a membership parameter, perform fuzzy output according to the cooling capacity error, the cooling capacity error change rate, the fuzzy control rule table, and the membership parameter, and generate a fuzzy signal; and a command generation module configured to, according to the fuzzy signal, generate a PID signal and, according to the PID signal, generate a regulation command.

In practical applications, the fuzzy control module can be a fuzzy controller. The command generation module can be a PID controller. The fuzzy controller, after acquiring the cooling capacity error, the change rate of cooling capacity error, the fuzzy control rule table, and the membership parameters, performs fuzzy output and generates the fuzzy signal. The PID controller, according to the fuzzy signal, generates a regulation command for regulating the frequency of the terminal fan coil.

The computing unit, according to the fuzzy control module and the command generation module, controls the frequency of the terminal fan coil, so as to distribute the ventilation system control authority of the host computer to the computing unit. In this way, it is conducive to responding quickly. Also, when the computing unit controls the frequency of the terminal fan coil, it gives the control freedom degree through fuzzy control, and does not strictly divide the controlled comfort and the cooling capacity supply, which helps to reduce the calculation pressure.

Optionally, the controlling unit, for the water multi-split system, comprises a process module configured to, according to a predicted cooling capacity calculated by the computing unit, generate a control command for regulating the refrigerating capacity of the water system.

Optionally, the controlling unit comprises: a third communication module configured to receive the predicted cooling capacity transmitted by the computing unit; and configured to transmit a control command to the water system; a second aggregation module configured to aggregate the predicted cooling capacities transmitted by the plurality of computing units to generate a total predicted cooling capacity, a data acquisition module configured to acquire an environmental parameter and a user control data; and an optimization module configured to, according to the total predicted cooling capacity, the environmental parameter and the user control data, perform coupling solution to generate an optimal control parameter, and according to the optimal control parameter, generate the control command.

The optimization module can be a cloud solver, and after receiving the total predicted cooling capacity, the cloud solver reads the current environmental parameter, according to the real-time variables required in the preset fitness objective function. Also, the user needs to input the adjustable range of the control parameter to be optimized, and customize the boundary condition, which are coupled into the fitness objective function of the cloud solver, to solve the optimal control parameter and issue the command to the water system for refrigeration.

After refrigeration of the water system, the environmental parameter, the control parameter range, the boundary condition, and the time characteristics change accordingly, forming a closed control loop. On this basis, the water system can actively respond to real-time loads, ensure the optimal operation of each unit, and achieve multi-level autonomous brain control.

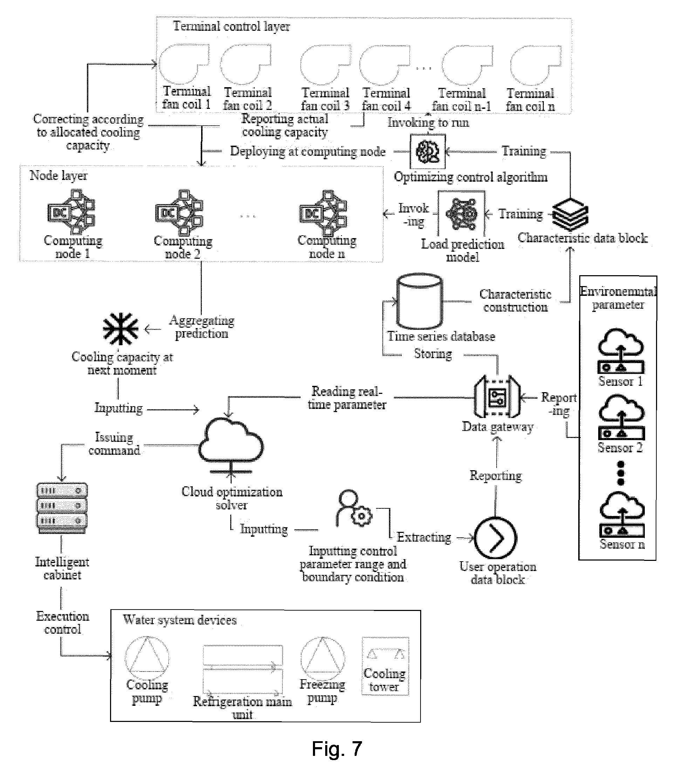

With reference to Fig. 7, in practical applications, the terminal unit is provided as the terminal autonomous execution node. The computing unit comprises a plurality of computing nodes, arranged as secondary computing nodes. The controlling unit comprises a cloud solver, an intelligent control cabinet, and a water system device, which are provided as the highest control nodes.

The terminal fan coil collects the cooling capacity and reports to the corresponding computing node. The computing node invokes the load prediction model, performs load prediction on the cooling capacity, generates the predicted cooling capacity, and transmits the predicted cooling capacity to the cloud optimization solver. The cloud solver obtains the real-time environment parameter, receives the control parameter and the boundary condition sent by the user, performs a coupling solution to generate an optimal control parameter with the predicted cooling capacity, the real-time environment parameter, the control parameter and the boundary condition, and issues commands to the intelligent control cabinet. The intelligent control cabinet regulates the refrigeration of the water system, according to the commands. The computing node invokes the terminal optimization model, that is, fuzzy control, to regulate the frequency of the terminal fan coil.

In this way, the control authority of the ventilation system controlled by the host computer is distributed to the computing nodes, thus realizing quick response.

In the present embodiment, a multi-level node layer can be provided between the terminal unit and the controlling unit, which is conducive to further improving the prediction accuracy, increasing the energy-saving space. Also, since the node layer itself has computing capabilities, it can operate independently of the cloud computing layer.

The above description and accompanying drawings sufficiently illustrate embodiments of the present disclosure to enable those skilled in the art to practice them. Other embodiments can comprise structural, logical, electrical, process, and other changes. The examples represent only possible variations. Unless expressly required, individual components and functions are optional, and the order of operations may vary. The elements and features of some embodiments can be comprised in or replaced with portions and features of other embodiments. Furthermore, the words used in this application are for the purpose of describing embodiments only and are not intended to limit the claims. As used in the description of the embodiments and claims, the singular forms "a", "an", and "the" are intended to equally comprise the plural forms unless the context clearly indicates otherwise. Similarly, the term "and/or" as used herein refers to any and all possible combinations comprising one or more associated lists. Additionally, the terms "comprise" and variations thereof "comprises" and/or "comprising", as used in the present disclosure, refer to the presence of stated features, integers, steps, operations, elements, and/or components, but do not preclude the presence or addition of one or more other features, integers, steps, operations, elements, components, and/or groupings thereof. Without further limitation, an element defined by the statement "comprising a/an" does not preclude the presence of additional identical elements in a process, method, or apparatus comprising the element. Herein, each embodiment may be focused on differences from other embodiments, and the same and similar parts between the embodiments may be referred to as each other. For the method, product, etc. disclosed in the embodiment, if it corresponds to the method portion disclosed in the embodiment, the description of the method portion can be referred to for relevant points.

## Claims

1. A water multi-split system, comprising a water system for refrigeration, and further comprising:
a plurality of terminal units, configured to allocate a cooling capacity generated by the water system, and according to a collected cooling capacity parameter, generate an actual cooling capacity;
a plurality of computing units, each of the computing units connected to one or more terminal units respectively, and according to the actual cooling capacity generated by the one or more terminal units, configured to calculate a predicted cooling capacity, and generate a regulation command to control the terminal units to operate; and
a controlling unit, connected to the plurality of computing units respectively, and according to the predicted cooling capacity calculated by the plurality of computing units, configured to generate a control command to regulate a refrigerating capacity of the water system.

2. The system according to claim 1, wherein the terminal unit comprises:
a plurality of terminal fan coils;
a parameter acquisition module, configured to acquire the cooling capacity parameter of each of the terminal fan coils;
a model invocation module, connected to the parameter acquisition module, and is configured to, according to the cooling capacity parameter of each of the terminal fan coils, generate the actual cooling capacity of each of the terminal fan coils;
a first aggregation module, configured to aggregate the actual cooling capacity of each of the terminal fan coils to generate a total actual cooling capacity; and
a first communication module, configured to transmit the total actual cooling capacity to the corresponding computing unit.

3. The system according to claim 1, wherein the computing unit comprises:
a load prediction module, configured to, according to a preset load prediction model, calculate the total actual cooling capacity with the predicted cooling capacity; and
a second communication module comprising a receiving sub-module configured to receive the total actual cooling capacity transmitted by the terminal unit and a transmitting sub-module configured to transmit the predicted cooling capacity to the controlling unit.

4. The system according to claim 3, wherein the transmitting sub-module is further configured to, in a case where the total actual cooling capacity is outside the predetermined range, according to a preset group planning algorithm, regulate the actual cooling capacity of the terminal fan coils, until the total actual cooling capacity is inside the predetermined range, and transmit the total actual cooling capacity to the controlling unit.

5. The system according to any one of claims 1 to 4, wherein the controlling unit comprises:
a third communication module, configured to receive the predicted cooling capacity transmitted by the computing units, and configured to transmit the control command to the water system;
a second aggregation module, configured to aggregate the predicted cooling capacity transmitted by the plurality of computing units, to generate a total predicted cooling capacity;
a data acquisition module, configured to acquire the environmental parameter and the user control data; and
an optimization module, configured to, according to the total predicted cooling capacity, the environmental parameter, and the user control data, perform a coupling solution to generate an optimal control parameter, and, according to the optimal control parameter, generate the control command.

6. A terminal unit, for a water multi-split system, comprising:
a regulation module, configured to allocate a cooling capacity generated by the water system; and
a cooling capacity generation module, configured to, according to a collected cooling capacity parameter, generate an actual cooling capacity, wherein the actual cooling capacity is used to generate the predicted cooling capacity.

7. The terminal unit according to claim 6, wherein the cooling capacity generation module comprises:
a parameter acquisition module, configured to acquire the cooling capacity parameter of each of the terminal fan coils;
a model invocation module, connected to the parameter acquisition module, and is configured to, according to the cooling capacity parameter of each of the terminal fan coils, generate the actual cooling capacity of each of the terminal fan coils;
a first aggregation module, configured to aggregate the actual cooling capacity of each of the terminal fan coils, to generate a total actual cooling capacity; and
a first communication module, configured to transmit the total actual cooling capacity to the corresponding computing unit.

8. A computing unit, for a water multi-split system, comprising:
a computing module, configured to calculate a predicted cooling capacity with the actual cooling capacity generated by one or more terminal units, wherein the predicted cooling capacity is configured to generate a control command to regulate a refrigerating capacity of the water system; and
a control module, configured to generate a regulation command to control a terminal unit to operate.

9. The computing unit according to claim 8, wherein the computing module comprises:
a load prediction module, configured to, according to a preset load prediction model, calculate the total actual cooling capacity with the predicted cooling capacity; and
a second communication module, comprising a receiving sub-module configured to receive the total actual cooling capacity transmitted by the terminal unit and a transmitting sub-module configured to transmit the predicted cooling capacity to the controlling unit.

10. The computing unit according to claim 9, wherein the transmitting sub-module is further configured to, in case where the total actual cooling capacity is outside the predetermined range, according to a preset group planning algorithm, regulate the actual cooling capacity of the terminal fan coils, until the total actual cooling capacity is inside the predetermined range, and transmit the total actual cooling capacity to the controlling unit.

11. A controlling unit, for a water multi-split system, comprising:
a process module, configured to, according to a predicted cooling capacity calculated by the computing unit, generate a control command to regulate a refrigerating capacity of a water system.

12. The controlling unit according to claim 11, wherein the process module comprises:
a third communication module, configured to receive the predicted cooling capacity transmitted by the computing units, and configured to transmit the control command to the water system;
a second aggregation module, configured to aggregate the predicted cooling capacity transmitted by the plurality of computing units, to generate a total predicted cooling capacity;
a data acquisition module, configured to acquire an environmental parameter and a user control data; and
an optimization module, configured to, according to the total predicted cooling capacity, the environmental parameter, and the user control data, perform a coupling solution to generate an optimal control parameter, and, according to the optimal control parameter, generate a control command.
